# EUROPÄISCHE PATENTANMELDUNG

(11) **EP 0 529 218 A1**
(43) Veröffentlichungstag der Anmeldung: **03.03.1993**
(21) Anmeldenummer: 92109966.9
(22) Anmeldetag: 13.06.1992
(51) Int. Cl.: B23Q 1/24, B23Q 1/00, B25B 5/06, B25B 5/08, B25B 5/14

(54) **Lünette**

(30) Priorität: 22.08.1991 DE 9110406 U
(71) Anmelder: SMW Schneider & Weisshaupt GmbH i.K., D-88074 Meckenbeuren (DE)
(72) Erfinder: Heisel, Alois, W-7994 Langenargen (DE)
(74) Vertreter: Engelhardt, Guido, Dipl.-Ing.

(57) **Zusammenfassung**

Bei einer selbstzentrierenden Lünette (1) mit drei in einem Gehäuse (11) gelagerten und in Abhängigkeit voneinander verstellbaren Haltegliedern (12, 13, 14) ist zur Halterung der Lünette (1), beispielsweise auf einem Maschinenbett (3), der Deckel (21) des Gehäuses (11) mit einem angeformten seitlich in Richtung des Gehäuses (11) abstehenden und vorzugsweise parallel zu dem mittleren Halteglied (12) verlaufenden Stützfuß (22) versehen.

Durch diese Ausgestaltung wird erreicht, daß nicht nur die Montage wesentlich vereinfacht wird, da lediglich die zusammengebaute Lünette (1) aufzuspannen ist, sondern es ist vor allem auch eine direkte Kraftübertragung auf ein Maschinenbett (3) ohne Zwischenglieder gegeben. Das Gehäuse (11) der Lünette (1) sitzt nämlich auf dem Stützfuß (22) auf, so daß dieses formschlüssig gehalten ist und auch durch hohe bei Zerspanungsvorgängen auftretende Kräfte nicht verschoben werden kann. Eine zentrische Einspannung eines Werkstückes (2) ist demnach stets sichergestellt.

## Beschreibung

Die Erfindung bezieht sich auf eine Lünette zum Aufspannen und/oder zur Halterung eines Werkstückes auf einer Drehmaschine mit drei in einem Gehäuse gelagerten in einer gemeinsamen Ebene verstellbaren Haltegliedern, von denen die beiden äußeren Halteglieder als spiegelbildlich zueinander angeordnete schwenkbar in dem Gehäuse abgestützte Winkelhebel ausgebildet sind und das mittlere Halteglied durch einen von Druckmittel beaufschlagbaren Betätigungskolben radial in Richtung auf das Werkstück verschiebbar in dem durch einen aufsetzbaren Deckel verschließbaren Gehäuse geführt ist und ein mit Steuerflächen versehenes Mittelstück trägt, das mit den freien Enden der Winkelhebel zusammenwirkt.

Lünetten dieser Art werden vielfach mittels Lünettenhalter auf einem Maschinenbett einer Drehmaschine montiert. Der in Form einer winkeligen Platte ausgebildete Lünettenhalter ist hierbei auf dem Maschinenbett festgespannt und an diesem ist seitlich das mit einem Deckel versehene Gehäuse auf der diesem gegenüberliegenden Seite mittels Schrauben befestigt.

Obwohl der Lünettenhalter groß baut und demnach teuer in der Herstellung ist, ist dennoch eine einwandfreie Halterung der Lünette oftmals nicht gewährleistet. Das Gehäuse der Lünette ist nämlich nur durch Reibschluß an dem Lünettenhalter gehalten, so daß bei hohen abzustützenden Kräften dieses mitunter verschoben werden kann und das Werkstück somit nicht mehr exakt zentriert ist. Auch erfordern die Montage der Lünette und insbesondere das Ausrichten einen großen Zeitaufwand, zumal zunächst auf dem Maschinenbett der Lünettenhalter und sodann das Gehäuse an diesem zu befestigen sind. Des weiteren ist von Nachteil, daß die Zuführung des Druckmittels zu dem den Betätigungskolben aufnehmenden Zylinder über Schläuche erfolgt, die an dem Gehäuse angebracht und durch den Späneraum hindurchgeführt sind. Beschädigungen der Schläuche sind somit nicht auszuschließen, auch sind diesen entsprechende Sicherungseinrichtungen zuzuordnen. Eine einfache Handhabung sowie eine stets zufriedenstellende Abstützung einer Lünette ist demnach bei Verwendung des bekannten Lünettenhalters vielfach nicht gegeben.

Aufgabe der Erfindung ist es daher, eine Lünette der vorgenannten Gattung in der Weise auszubilden, daß diese ohne Lünettenhalter an einem Maschinenbett zuverlässig befestigt werden kann. Die durch Zerspanungsvorgänge an dem eingespannten Werkstück hervorgerufenen Kräfte sollen hierbei unmittelbar auf das Maschinenbett übertragen werden, auch soll eine formschlüssige Abstützung des die Halteglieder tragenden Gehäuses gewährleistet sein, so daß auch bei hohen Zerspanungskräften keine Verschiebungen in Kauf zu nehmen sind. Des weiteren soll die Zuführung des Druckmittels zu dem den Betätigungskolben aufnehmenden Zylinder ohne Schlauchleitungen und den dazu erforderlichen Sicherheitseinrichtungen bewerkstelligt werden. Der Bauaufwand, mit dem dies zu erreichen ist, soll gering gehalten werden, auch soll die Montage der Lünette auf dem Maschinenbett ohne Schwierigkeiten möglich sein.

Gemäß der Erfindung wird dies bei einer Lünette der eingangs genannten Art dadurch bewerkstelligt, daß zur Halterung der Lünette beispielsweise auf einem Maschinenbett der Deckel des Gehäuses mit einem angeformten seitlich in Richtung des Gehäuses abstehenden und vorzugsweise parallel zu dem mittleren Halteglied verlaufenden Stützfuß versehen ist.

Zweckmäßig ist es hierbei, den Stützfuß des Deckels auf der dem Gehäuse zugekehrten Seite mit einer Anlagefläche auszustatten, auf der das Gehäuse mit einer angearbeiteten Gegenfläche abgestützt ist, und den Deckel auf der dem Gehäuse abgewandten Seite mit einer oder mehreren Stützrippen sowie mit Aufnahmebohrungen zur Abstützung der die äußeren Halteglieder tragenden Bolzen zu versehen.

Vorteilhaft ist es ferner, den Stützfuß über eine oder mehrere auswechselbare Distanzplatten an einem vorzugsweise in dem Maschinenbett verstellbar geführten Schlitten zu befestigen.

Des weiteren ist es angebracht, das zur Beaufschlagung des Betätigungskolbens vorgesehene Druckmittel aus dem Schlitten in den Stützfuß des Deckels zu überführen, so daß im Späneraum keine Schlauchleitungen hängen.

Dies kann in der Weise bewerkstelligt werden, daß in einander zugekehrten in den Schlitten und den Stützfuß des Deckels eingearbeitete Druckmittelkanäle jeweils ein Absperrventil eingesetzt ist, von denen das in dem Schlitten angeordnete Absperrventil als entsperrbares Rückschlagventil ausgebildet sein sollte.

Zur Entsperrung des in dem Schlitten angeordneten Absperrventils kann in einfacher Weise in dem Stützfuß des Deckels ein in Achsrichtung dieses Absperrventils verstellbares Stellglied, beispielsweise in Form eines mittels eines Gewindeansatzes verstellbaren Bolzens, eingesetzt werden, das das Absperrventil des Stützfußes trägt; der Ventilkörper des in den Stützfuß eingesetzten Absperrventils sollte hierbei begrenzt verschiebbar in dem Stellglied geführt und mit einem Stößel versehen sein, der mit dem Ventilkörper des in den Schlitten angeordneten Absperrventils zu dessen Entsperrung zusammenwirkt.

Wird eine Lünette gemäß der Erfindung ausgebildet, indem der Deckel des Lünettengehäuses mit einem seitlich abstehenden Stützfuß versehen wird, der beispielsweise mittels eines Schlittens unmittelbar an einem Maschinenbett aufgespannt werden kann, so ist nicht nur die Montage wesentlich vereinfacht, da lediglich die zusammengebaute Lünette aufzuspannen ist, sondern es ist vor allem auch eine direkte Kraftübertragung auf das Maschinenbett ohne Zwischenglieder gegeben. Das Gehäuse der Lünette, an dem die Halteglieder abgestützt sind, sitzt nämlich auf dem Stützfuß auf, so daß dieses formschlüssig gehalten ist und auch durch hohe bei Zerspanungsvorgängen auftretende Kräfte nicht verschoben werden kann. Eine zentrische Einspannung eines Werkstückes ist demnach stets sichergestellt.

Des weiteren ist von Vorteil, daß keine Schlauchleitungen, die beschädigt werden können und die mit entsprechenden Sicherungseinrichtungen auszustatten sind, durch den Späneraum hindurchgeführt werden müssen. Vielmehr ist durch die vorschlagsgemäße Ausgestaltung eine kompakte Baueinheit geschaffen, die in wirtschaftlicher Weise herzustellen ist und eine hohe Betriebssicherheit aufweist.

In der Zeichnung ist ein Ausführungsbeispiel einer gemäß der Erfindung ausgebildeten Lünette dargestellt, das nachfolgend im einzelnen erläutert ist. Hierbei zeigt:
- Figur 1: eine unmittelbar auf einem Maschinenbett aufgespannte Lünette in Seitenansicht,

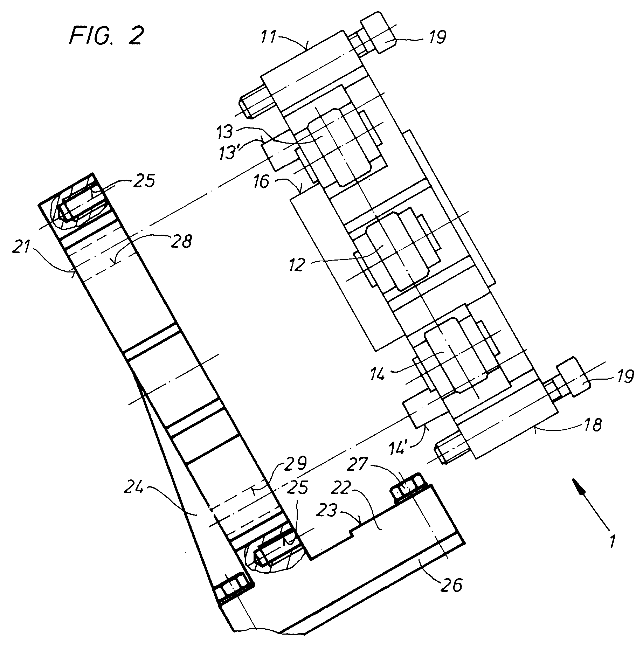

- Figur 2: die Lünette nach Figur 1 in einer Explosionsdarstellung mit dem zugeordneten mit einem Stützfuß versehenen Deckel in Seitenansicht und
- Figur 3: eine der Druckmittelübertragungen bei der Lünette nach Figur 1 in einer vergrößerten Ausschnittdarstellung.

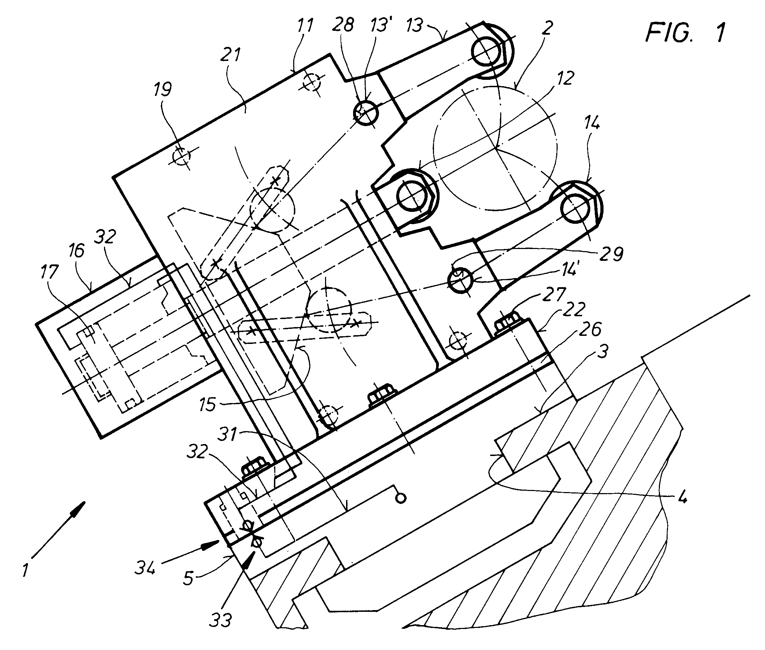

Die in Figur 1 dargestellte und mit 1 bezeichnete Lünette dient zum Aufspannen und/oder zur Halterung eines strichpunktiert eingezeichneten stangenförmigen Werkstückes 2 auf einer Drehmaschine und besteht aus drei in einem Gehäuse 11 gelagerten Haltegliedern 12, 13 und 14, die in einer gemeinsamen Ebene verstellbar sind. Die beiden äußeren Halteglieder 13 und 14 sind hierbei als Winkelhebel ausgebildet und auf Bolzen 13' bzw. 14' schwenkbar in dem Gehäuse 11 gelagert. Das mittlere Halteglied 12 ist dagegen radial in Richtung des Werkstückes 2 verstellbar geführt. Dazu ist mit dem mittleren Halteglied 12 ein Betätigungskolben 17 verbunden, der in einem an dem Gehäuse 11 angeflanschten Zylinder 16 eingesetzt ist. Außerdem trägt das mittlere Halteglied 12 ein mit Steuerflächen versehenes Mittelstück 15, das mit den freien Enden der beiden äußeren Halteglieder 13 und 14 zusammenwirkt.

Um die Lünette 1 unmittelbar auf einem Maschinenbett 3 einer Werkzeugmaschine - in dem dargestellten Ausführungsbeispiel an einem Schrägbett - aufspannen zu können, und zwar mit Hilfe eines in einer Führungsnut 4 eingesetzten Schlittens 5, ist an einem das Gehäuse 11 seitlich verschließenden Deckel 21 ein Stützfuß 22 angeformt, der in Richtung des Gehäuses 11 absteht und parallel zu dem mittleren Halteglied 12 verläuft. Auf der dem Gehäuse 11 zugekehrten Seite ist der Stützfuß 11 mit einer Anlagefläche 23 versehen, und an dem Gehäuse 11 ist eine Gegenfläche 18 angearbeitet, die im zusammengebauten Zustand auf der Anlagefläche 23 aufliegt. Das Gehäuse 11 ist somit formschlüssig an dem Stützfuß 22 abgestützt, die von den Haltergliedern 12, 13 und 14 auf das Gehäuse 11 übertragenen Kräfte werden daher unmittelbar auf das Maschinenbett 3 übertragen.

Mittels das Gehäuse 11 durchgreifender Schrauben 19 ist dieses an dem Deckel 21, in den dazu Gewindebohrungen 25 eingearbeitet sind, befestigt. Des weiteren ist der Deckel 21 auf der dem Gehäuse 11 abgekehrten Seite mit zwei Stützrippen 24 ausgestattet und über eine Distanzplatte 26, durch die Fertigungstoleranzen ausgeglichen werden können, ist mittels Schrauben 27 der Deckel 21 an dem Schlitten 5 befestigt. Auch sind in dem Deckel 21 zwei Bohrungen 28 und 29 eingearbeitet, in denen die die äußeren Halteglieder 13 und 14 tragenden Bolzen 13' und 14' verdrehbar gelagert und abgestützt sind.

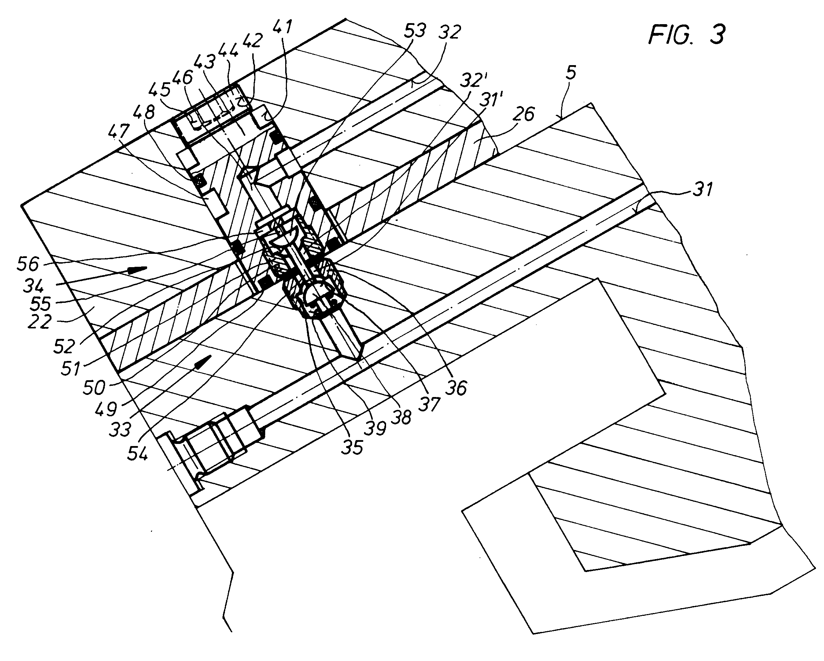

Zur Zuführung von Druckmittel zu den dem Betätigungskolben 17 zugeordneten Druckräumen sind, wie dies der Ausschnittzeichnung nach Figur 3 zu entnehmen ist, in den Schlitten 5 sowie den Stützfuß 22 miteinander kommunizierende Zuführungskanäle 31 und 32 eingearbeitet, in die an der Übergangsstelle jeweils ein Absperrventil 33 bzw. 34 eingesetzt ist. Das Absperrventil 33 ist hierbei als entsperrbares Rückschlagventil ausgebildet, das bei der Monage der Lünette 1 manuell zu öffnen ist.

Dazu ist in einer in den Stützfuß 22 eingearbeiteten Bohrung 41 ein Verstellglied 43 eingesetzt, das das Absperrventil 34 trägt und mit einem Gewindeansatz 44 ausgestattet ist, der in einer Gewindebohrung 42 des Stützfußes 22 eingeschraubt ist. Mit Hilfe eines in eine Schlüsselöffnung 45 einsetzbaren Werkzeuges kann somit das Verstellglied 43 in seiner Lage verändert werden.

Die beiden Absperrventile 33 und 34 bestehen jeweils aus einer Hülse 36 bzw. 51, die in in den Schlitten 5 bzw. das Stellglied 43 eingearbeitete Gewindebohrungen 35 bzw. 50 eingeschraubt sind, sowie Ventilkörpern 38 und 53, die mit an den Hülsen 36 bzw. 51 angearbeiteten Ventilflächen 37 bzw. 52 zusammenwirken. Die Ventilkürper 38 und 53 sind verschiebbar in den Hülsen 36 bzw. 51 gehalten, wobei auf den Ventilkörper 36 des Absperrventils 33 eine Druckfeder 39 einwirkt. Über einen in das Stellglied 43 eingearbeiteten Kanal 46 sowie eine Ringnut 47, die durch Dichtungen 48 abgedichtet ist, wird die Druckmittelübertragung in den Zuführungskanal 32 bewerkstelligt.

Wird die Lünette 1 von dem Schlitten 5 abgenommen, so werden die Ventile 33 und 34 selbsttätig geschlossen.

Der Ventilkörper 38 wird hierbei von dem in dem Zuführungskanal 31 befindlichen Druckmittel beaufschlagt und gegen die Ventilfläche 37 gepreßt, so daß kein Druckmittel mehr über den durch die Hülse 36 führenden Kanalabschnitt 31' abströmen kann. Und der Ventilkörper 33 wird durch das in dem Zuführungskanal 32 befindliche Druckmittel beaufschlagt und an der Ventilfläche 52 angelegt, Druckmittel kann somit über den in der Hülse 51 vorgesehenen Kanalabschnitt 32' nicht aus der Lünette 1 austreten.

Bei der Montage der Lünette wird das Absperrventil 33 mit Hilfe des Stellgliedes 43 entsperrt. Dazu sind an den Ventilkörper 51 beiderseits Stößel 54 und 55 angeformt und das Stellglied 43 ist mit einem Quersteg 56 versehen, an dem der Stößel 55, wie dies in Figur 3 dargestellt ist, abgestützt ist. Der Stößel 54 wirkt dagegen auf den Ventilkörper 38 des Absperrventils 33 ein. Da bei der Demontage der Lünette 1 das Verstellglied 43 derart nach oben verstellt wurde, beispielsweise bis zur Anlage an dem Stützfuß 22, sind die Absperrventile 33 und 34 durch das in den Zuführungskanälen 31 bzw. 32 befindliche Druckmittel geschlossen.

Wird, ausgehend von diesem Betriebszustand des Verstellgliedes 43, dieses in Richtung des Absperrventiles 33 verstellt, so wird, sobald der Stößel 54 auf dem durch die Feder 39 belasteten Ventilkörper 38 aufliegt, zunächst der Ventilkörper 53 des Absperrventils 34 bis zur Anlage des Stößels 55 an dem Quersteg 56 verschoben und somit das Absperrventil 34 geöffnet. Sodann wird durch den Stößel 54 der Ventilkörper 38 des Absperrventils 33 entgegen der Kraft der Feder 39 nach unten gedrückt und dieses wird somit geöffnet. Das Druckmittel kann nunmehr aus dem Zuführungskanal 31 über die geöffneten Absperrventile 33 und 34 in den Zuführungskanal 32 überströmen und in einen der in dem Zylinder 16 vorgesehenen Druckräume gelangen. Durch eine weitere in die Stirnseite des Stellgliedes 43 eingesetzte Dichtung 49 wird hierbei vermieden, daß Druckmittel seitlich zwischen den Absperrventilen 33 und 34 abströmen kann.

Ist ein wechselweise beidseitig von Druckmittel beaufschlagbarer Betätigungskolben 17 dem mittleren Halteglied 12 zugeordnet, sind selbstverständlich zwei Druckmittelübertragungen gemäß Figur 3 vorzusehen.

## Patentansprüche

1. Lünette zum Aufspannen und/oder zur Halterung eines Werkstückes auf einer Drehmaschine mit drei in einem Gehäuse gelagerten in einer gemeinsamen Ebene verstellbaren Haltegliedern, von denen die beiden äußeren Halteglieder als spiegelbildlich zueinander angeordnete schwenkbar in dem Gehäuse abgestützte Winkelhebel ausgebildet sind und das mittlere Halteglied durch einen von Druckmittel beaufschlagbaren Betätigungskolben radial in Richtung auf das Werkstück verschiebbar in dem durch einen aufsetzbaren Deckel verschließbaren Gehäuse geführt ist und ein mit Steuerflächen versehenes Mittelstück trägt, das mit den freien Enden der Winkelhebel zusammenwirkt,
**dadurch gekennzeichnet,**
daß zur Halterung der Lünette (1), beispielsweise auf einem Maschinenbett (3), der Deckel (21) des Gehäuses (11) mit einem angeformten seitlich in Richtung des Gehäuses (11) abstehenden und vorzugsweise parallel zu dem mittleren Halteglied (12) verlaufenden Stützfuß (22) versehen ist.

2. Lünette nach Anspruch 1
**dadurch gekennzeichnet,**
daß der Stützfuß (22) des Deckels (21) auf der dem Gehäuse (11) zugekehrten Seite mit einer Anlagefläche (23) versehen ist, auf der das Gehäuse (11) mit einer angearbeiteten Gegenfläche (18) abgestützt ist.

3. Lünette nach Anspruch 1 oder 2,
**dadurch gekennzeichnet,**
daß der Deckel (21) des Gehäuses (11) auf der diesem abgewandten Seite mit einer oder mehreren Stützrippen (24) und/oder mit Aufnahmebohrungen (28, 29) zur Abstützung der die äußeren Halteglieder (13, 14) tragenden Bolzen 13', 14') versehen ist.

4. Lünette nach einem oder mehreren der Ansprüche 1 bis 3,
**dadurch gekennzeichnet,**
daß der Stützfuß (22) des Deckels (21) über eine oder mehrere auswechselbare Distanzplatten (26) an einem vorzugsweise in dem Maschinenbett (3) verstellbar geführten Schlitten (5) befestigbar ist.

5. Lünette nach einem oder mehreren der Ansprüche 1 bis 4,
**dadurch gekennzeichnet,**
daß das zur Beaufschlagung des Betätigungskolbens (17) vorgesehene Druckmittel aus dem Schlitten (5) in den Stützfuß (22) des Deckels (21) überführbar ist.

6. Lünette nach Anspruch 5,
**dadurch gekennzeichnet,**
daß in einander zugekehrten in den Schlitten (5) und den Stützfuß (22) des Deckels (21) eingearbeitete Druckmittelkanäle (31, 32) jeweils ein Absperrventil (33, 34) eingesetzt ist, von denen das in dem Schlitten (5) angeordnete Absperrventil (33) als entsperrbares Rückschlagventil ausgebildet ist.

7. Lünette nach Anspruch 6,
**dadurch gekennzeichnet,**
daß zur Entsperrung des in dem Schlitten (5) angeordneten Absperrventils (33) in dem Stützfuß (22) des Deckels (21) ein in Achsrichtung dieses Absperrventils (33) verstellbares Stellglied (43), beispielsweise in Form eines mittels eines Gewindeansatzes (44) verstellbaren Bolzens, eingesetzt ist, das das Absperrventil(34) des Stützfußes (32) trägt, und daß der Ventilkörper (53) des in den Stützfuß (32) eingesetzten Absperrventils (34) begrenzt verschiebbar in dem Stellglied (43) geführt und mit einem Stößel (54) versehen ist, der mit dem Ventilkörper (38) des in dem Schlitten (5) angeordneten Absperrventils (33) zu dessen Entsperrung zusammenwirkt.
